Europäisches Patentamt

European Patent Office

Office européen des brevets

(19)

(11) Veröffentlichungsnummer: **0 264 094**

**A1**

## (12) EUROPÄISCHE PATENTANMELDUNG

(21) Anmeldenummer: 87114854.0

(22) Anmeldetag: 12.10.87

(51) Int. Cl.4: **G12B 9/08**

(30) Priorität: 13.10.86 CH 4076/86
01.07.87 DE 3721682

(43) Veröffentlichungstag der Anmeldung:
**20.04.88 Patentblatt 88/16**

(84) Benannte Vertragsstaaten:
**AT BE DE ES FR GB GR IT LU NL SE**

(71) Anmelder: **PAV Präzisions-Apparatebau
Aktiengesellschaft
Schaaner Strasse 40
FL-9490 Vaduz(LI)**

(72) Erfinder: **Kerner, Martin
Haus 81
CH-3116 Kirchdorf(CH)**
Erfinder: **Lazecki, Rene
Heldaustrasse 160
CH-9470 Buchs(CH)**
Erfinder: **Thöny, Christian
Im Tröxle 27
FL-9494 Schaan(LI)**

(74) Vertreter: **Witte, Alexander, Dr.-Ing.
Schickhardtstrasse 24
D-7000 Stuttgart 1(DE)**

(54) **Bewegungselement für Feinmess- oder Justiergeräte.**

(57) Ein Bewegungselement ist für Feinmeß-oder Justiergeräte vorgesehen, insbesondere für Meßgeräte zum Ermitteln von Abmessungen einer Welle (40). Das Bewegungselement (10b) weist mindestens ein Federgelenk (16b/1 bis 16b/4) auf.

Um einen extrem einfachen Aufbau mit entsprechend geringen Herstellkosten bei hoher Zuverlässigkeit, geringem Gewicht und Reibungsfreiheit der beweglichen Bauteile (12b) zu erzielen, ist das Federgelenk (16b/1 bis 16b/4) mit seinen angrenzenden Bauteilen (34b, 35b, 36b, 37b) einstückig ausgebildet.

Fig. 5

EP 0 264 094 A1

## Bewegungselement für Feinmeß-oder Justiergeräte

Die Erfindung betrifft ein Bewegungselement für Feinmeß-oder Justiergeräte mit mindestens einem Federgelenk.

Derartige Bewegungselemente, beispielsweise mit Blattfedern, sind allgemein bekannt.

Federgelenke haben die Aufgabe, mindestens zwei Bauteile miteinander gelenkig zu verbinden und gleichzeitig eine Rückstellkraft zu erzeugen, die bei einem Auslenken des einen Bauteils gegenüber einem anderen zu einer Rückstellung desselben führt, sobald die Auslenkkraft wegfällt. In Feinmeß-, wie zum Beispiel Justiergeräten, ist es wesentlich, derartige Federgelenke möglichst spielfrei, hysteresefrei, reibungsarm, verschleißfrei und so klein wie möglich zu gestalten. Zwar sind eine Reihe unterschiedlicher Ausführungsformen von Federgelenken bekannt, die jedoch den bei Feinmeßoder Justiergeräten zu stellenden Anforderungen nicht optimal genügen.

Bei der eingangs genannten bekannten Ausführungsform, bei der die zu verbindenden Bauteile mittels einer Blattfeder verbunden sind, ist vor allem von Nachteil, daß derartige Blattfedern produktionsbedingt immer mit Toleranzen behaftet sind, die sich zu den Produktionstoleranzen der Bauteile addieren können. Hierdurch entsteht häufig ein Produktionsausschuß oder es müssen Maßungenauigkeiten mit erheblichem Justieraufwand ausgeglichen werden. Nachteilig ist darüber hinaus, daß die Befestigung derartiger Blattfedern relativ aufwendig gestaltet werden muß, da diese, um ihre Federcharakteristik nicht zu stören, praktisch nur geschraubt oder genietet werden können. Gemessen an den insgesamt benötigten Werkstoffmengen, ist eine derartige Verbindung auch mit relativ viel zusätzlichem Werkstoffaufwand behaftet, was bei teuren Materialien, wie beispielsweise im chemischen Bereich, zu einem erhöhten Kostenaufwand führt und darüber hinaus die zu bewegenden Bauteile schwer macht. Dadurch können Trägheitsmomente nachteilig für die Bewegungsabläufe wirksam werden. Weiterhin bestehen Nachteile bei kleinen tragbaren Geräten, weil dort das Gesamtgewicht des Gerätes von besonderer Bedeutung ist.

Schließlich haben die bekannten Bewegungselemente, da sie aus mehreren Teilen zusammengesetzt sind, stets den Nachteil, daß infolge der Relativbewegung der Bauteile des Bewegungselements zueinander Reibungsverluste entstehen und diese Reibungsverluste zu Bewegungshysteresen oder zu Haftreibungseffekten führen.

Aus der EP-A-125 045 ist eine Positioniereinrichtung der eingangs genannten Art bekannt, bei der lange, gekröpfte, blattfederartige Verbindungsstücke verwendet werden, die eine Bewegung eines Objekts in eine oder zwei Richtungen ermöglichen soll, wobei dadurch die Blattfedern verbogen werden. Die bekannte Vorrichtung ermöglicht zwar angeblich eine geradlinige Bewegung eines Objekts in zwei Richtungen ohne die oben erwähnten Nachteile, durch die dazu erforderlichen relativ langen Verbindungsstücke wird jedoch ein neuer Nachteil bewirkt. Die gesamte Positioniereinrichtung ist nämlich in sich instabil. Zahlreiche Federkomponenten wirken gegeneinander oder miteinander, wobei geringfügigste Veränderungen an einer einzigen dieser Federn das gesamte System unbestimmbar machen. Dadurch ist ein häufiges Nachjustieren einer derartigen Vorrichtung erforderlich. Darüber hinaus erzeugt das System in sich eine relativ große Reibung, die durch die Verstellkraft überwunden werden muß. Ein Reduzieren dieser Reibung ist durch ein weiteres Reduzieren der Wandstärke der Federn, bzw. Verbindungsstücke, nicht mehr möglich, da ansonsten keine ausreichende Biegesteifigkeit mehr gegeben ist, die ein Durchdrücken des Objektträgers bei relativ großen Objektgewichten bewirken würde.

Eine andere Art von Positioniereinrichtungen ist ferner aus der DE-Z "Technische Rundschau" 41/86, S. 178-182, bekannt.

Bei dieser bekannten Positioniereinrichtung ist ein Parallelogramm in seinen Eckpunkten durch Gelenke verbunden und ermöglicht auf diese Weise die Aufnahme von Meßwerten. Durch die Schwenkbewegung der Schenkel des Parallelogramms wird insofern ein Meßfehler erzeugt, als die Schwenkbewegung nicht nur einen Vektor in Anstoßrichtung, sondern auch in einem Winkel von 90° dazu aufweist, wodurch bei einer Messung beispielsweise fälschlich bei einer Auslenkung in einer Richtung auch ein Meßwert in einer anderen Richtung ange zeigt wird. Auf diesen Nachteil wird auch in der zuvor bereits gewürdigten EP-A-125 045 hingewiesen. Die Positioden bisher bekannten herkömmlichen Federgelenksverbindungen sämtliche weiter oben beschriebenen Nachteile auf. Darüber hinaus ist diese bekannte Positioniereinrichtung verhältnismäßig großflächig, was im meßtechnischen Bereich unerwünscht ist.

Der Erfindung liegt daher die Aufgabe zugrunde, ein Bewegungselement der eingangs genannten Art dahingehend weiterzubilden, daß möglichst geringe Massen, Hysteresefreiheit, Verschleißfreiheit, gute Rückstelleigenschaften und hohe Fertigungspräzision bei verhältnismäßig einfacher und kostengünstiger Fertigung möglich sind, so daß die oben beschriebenen Nachteile vermieden werden.

Ein weiteres Ziel der vorliegenden Erfindung ist es, mit den erfindungsgemäßen Bewegungselementen Meßgeräte und Positioniereinrichtungen zu schaffen.

Bekannte Meßgeräte, wie sie z.B. zum Vermessen der Außenkontur einer Welle verwendet werden, verwenden in der Regel zylindrische Meßtaster. Diese Meßtaster weisen an ihrer vorderen Spitze ein kugelkappenförmiges Tastelement auf, das im Meßtaster axial gegen die Kraft einer Feder verschiebbar ist. Mit diesem Tastelement ist ein üblicherweise induktives Wegaufnehmersystem verbunden, so daß ein Signal erzeugt wird, das der Auslenkung des Tastelementes (typischerweise in einem Bereich von +/- 1 mm) entspricht. Die bekannten Tastköpfe in derartigen Meßgeräten haben jedoch den Nachteil, daß sie verhältnismäßig dick ausgebildet sind, sie haben typischerweise einen Durchmesser von 8 mm oder mehr. In diesen Fällen ist jedoch das Ausmessen von sehr schmalen Eindrehungen von Wellen oder sonstwie schlecht zugänglichen Oberflächenbereichen von Werkstücken nicht möglich, ebenso wie die simultane Messung unmittelbar nebeneinanderliegender Meßpunkte aus Platzgründen ausscheidet. Zwar ist es bekannt, bei bekannten Tastern lange schmale Verlängerungen aufzusetzen, so daß auch schwieriger zugängliche Meßorte erreicht werden, dies löst jedoch nicht das Problem, mehrere axial dicht nebeneinanderliegende Meßpunkte zu messen, weil auch bei axialer Verlängerung der Meßtaster dann im radialen Abstand von der Welle der große Durchmesser der Taster stört.

Ein weiterer wesentlicher Nachteil dieser bekannten Meßtaster ist, daß sie sehr aufwendig in der Herstellung und damit teuer sind, so daß Meßgeräte, mit denen simultan eine große Anzahl von Meßpunkten an Werkstücken gemessen werden sollen, außerordentlich aufwendig und teuer werden.

Ein weiteres Anwendungsgebiet der erfindungsgemäßen Bewegungselemente sind Positioniereinrichtungen, wie beispielsweise Kreuztische. Derartige Kreuztische dienen typischerweise dazu, Objekte, beispielsweise mikroskopische Apparate, in mindestens zwei Koordinatenachsen zu verschieben. Umgekehrt können derartige Positioniereinrichtungen aber auch dazu dienen, die unbekannte Position eines Objekts festzustellen, wenn ein bewegliches Teil dem Objekt nachgeführt und die entsprechende Positionsabweichung ermittelt wird.

Bekannte Kreuzschlitten bestehen aus vielen Einzelbauteilen, die an Führungen aufeinander gleiten und durch verschiedenste Antriebseinrichtungen gegeneinander bewegt werden können.

Der Aufbau derartiger Kreuzschlitten erfordert viele unterschiedliche Arbeitsgänge und die zu bewegenden Massen sind groß. Es tritt daher vor allem unerwünschte Reibung auf, die zu Hysteresen und Haftreibungseffekten führt. Eine Schmierung der aufeinander laufenden Elemente ist jedoch nicht immer möglich, insbesondere nicht, wenn derartige Positioniereinrichtungen im chemischen Bereich eingesetzt werden sollen.

Die vorstehend genannten Aufgaben werden erfindungsgemäß dadurch gelöst, daß das Federgelenk mit seinen angrenzenden Bauteilen einstückig ausgebildet ist.

Die einstückige Ausbildung des gesamten Bewegungselements hat zum einen den Vorteil, daß der Materialaufwand geringstmöglich und die Herstellung auch sehr einfach ist, weil es prinzipiell möglich ist, das gesamte Bewegungselement in einem einzigen Arbeitsgang herzustellen.

Durch die einstückige Ausbildung wird auch die Reibung gegeneinanderlaufender Bauteile verhindert, so daß das erfindungsgemäße Bewegungselement prinzipiell hysteresefrei arbeitet. Auch kann das erfindungsgemäße Bewegungselement besonders leicht und klein ausgebildet werden, so daß es sich für Anwendungen eignet, in denen das entsprechende Gerät entweder transportabel ist oder eine Vielzahl erfindungsgemäßer Bewegungselemente aufweist.

Schließlich ist die Herstellung des erfindungsgemäßen Bewegungselements auch extrem kostengünstig, so daß hochpräzise Messungen oder Positionierungen nun auch mit Geräten in einer Preisklasse möglich sind, die deutlich unter der bekannter Geräte liegt.

Bei einer bevorzugten Ausgestaltung der Erfindung sind je zwei von mindestens vier als starre Schenkel ausgebildeten Bauteilen durch ein Federgelenk zu mindestens einem in seinen Eckpunkten elastisch verformbaren Parallelogramm verbunden, wobei wenigstens ein Schenkel bei der Verformung des ihm zugeordneten Parallelogramms unverschiebbar ist.

Diese Maßnahme hat den Vorteil, daß das bewegliche Element in seiner Erstreckungsrichtung während der Auslenkung konstant bleibt, was eine besonders einfache Meßwerterfassung bzw. -auswertung gestattet. Auch ist das bewegliche Element bei einer Parallelogrammführung definiert geführt, so daß die Meßwerte besonders gut reproduzierbar sind.

Bei einer bevorzugten Weiterbildung dieser Variante ist ein Schenkel eines ersten Parallelogramms mit einem Schenkel eines zweiten Parallelogramms - vorzugsweise starr und einstückig - verbunden.

Diese Maßnahme ermöglicht es, das Bewegungselement in zwei, vorzugsweise zueinander senkrechten Koordinatenrichtungen zu verschieben, so daß der Aufbau von Kreuztischen und dgl. möglich ist.

Bei einer bevorzugten Weiterbildung dieser Variante liegt das zweite Parallelogramm innerhalb einer durch Schenkel des ersten Parallelogramms gebildeten Umrißlinie.

Diese Maßnahme hat den Vorteil, daß ein besonders kompakter Aufbau des Bewegungselementes entsteht, weil der Außenumriß nicht größer ist als derjenige des ersten Parallelogramms.

Bei Ausbildungen der Erfindung ist mindestens ein bewegliches Bauteil bzw. Schenkel mit einem an ein Meßobjekt anlegbaren Tastkopf versehen.

Diese Maßnahme hat den Vorteil, daß das auszumessende Objekt unmittelbar durch das bewegliche Bauteil erfaßt wird, so daß Meßfehler durch mechanische Übertragungsmittel entfallen.

Besonders bevorzugt ist dabei, wenn der Tastkopf an einem Fortsatz des Bauteils bzw. Schenkels angeordnet ist.

Diese Maßnahme ermöglicht es, an nahezu beliebigen Stellen von Meßobjekten Messungen vorzunehmen, weil die Gestalt des Fortsatzes an die jeweiligen Meßbedingungen angepaßt werden kann.

Besonders bevorzugt ist, wenn der Fortsatz rechtwinklig vom beweglichen Schenkel in Verlängerung eines weiteren beweglichen Schenkels eines Parallelogramms absteht.

Bei diesem Ausführungsbeispiel macht man sich die Tatsache zunutze, daß das erfindungsgemäße Bewegungselement in seiner Ausbildung als Parallelogramm nahezu beliebig dünn ausgebildet werden kann, so daß bei einer entsprechenden Verlängerung des vom festen Schenkel abgehenden beweglichen Schenkels zahlreiche Punkte in unmittelbarem axialem oder radialem Abstand voneinander gemessen werden können, weil, im Gegensatz zu bekannten Meßtastern, die erfindungsgemäßen Bewegungselemente bzw. deren Fortsätze einander nicht stören.

Bei weiteren Ausführungsformen der Erfindung sind mindestens ein bewegliches Bauteil bzw. Schenkel mit einem ersten Teil und mindestens ein festes Bauteil bzw. Schenkel mit einem zweiten Teil eines Lagesensors versehen.

Diese Maßnahme hat den Vorteil, daß die Bewegung der Bauteile zueinander unmittelbar in ein elektrisches Signal umgesetzt wird, so daß auch hier Meßwertverfälschungen durch weitere Übertragungsglieder ausgeschlossen werden. Außerdem ergibt sich auf diese Weise ein extrem kompakter Aufbau, weil Lagesensoren der hier erforderlichen Art mit einem Meßbereich von nur wenigen Millimetern in extrem kleiner Bauart, jedoch mit der erforderlichen Präzision, erhältlich sind.

Auch bei diesem Ausführungsbeispiel ist bevorzugt, wenn die Teile an einem Fortsatz des Bauteils bzw. Schenkels angeordnet sind.

Dies ermöglicht eine größere Freiheit in der Anordnung der Teile des Lagesensors, wobei bevorzugt diese Fortsätze in das Innere des von einem Parallelogramm umschlossenen Rahmens ineinragen, so daß auch bei diesem Ausführungsbeispiel der Erfindung die Größe des Bewegungselementes durch die Außenkontur des jeweils äußersten Parallelogramms bestimmt ist.

Bei Varianten dieses Ausführungsbeispiels kann der Lagesensor induktiv mit einem in eine Spule tauchenden Kern sein und die Spulenachse kann parallel zum beweglichen Schenkel angeordnet sein.

Diese Maßnahmen ergeben eine besonders zuverlässige Meßanordnung, weil sich dann der Kern mit einer Komponente seiner Bewegungsrichtung parallel zur Spulenachse bewegt und der sich einstellende radiale Versatz so geringfügig ist, daß er außer Betracht bleiben kann.

Als weitere Bauformen von Lagesensoren kommen kapazitive Sensoren oder eine Kombination eines Magneten mit einem magnetfeldempfindlichen Element, beispielsweise einem HallElement, einer Feldplatte od. dgl., in Betracht. Auch kann als Lagesensor ein einen Lichtrahl aussendendes Teil mit einem fotoempfindlichen Teil vorgesehen sein, wobei diese Teile relativ zueinander verschiebbar sind. Diese Aufzählung ist jedoch nicht einschränkend, es können vielmehr auch beliebige andere Bauformen von Lagesensoren verwendet werden.

Bevorzugt ist, wenn der Lagesensor an eine Schwellwertstufe mit nachgeordneter Anzeige angeschlossen ist.

Diese Maßnahme ermöglicht es, das erfindungsgemäße Bewegungselement als Nullpunktdetektor oder als Detektor für eine vorbestimmte endliche Position einzusetzen, weil bei Erreichen des Nullpunktes bzw. der vorbestimmten Position das Anzeigeelement angesteuert wird.

Besonders bevorzugt sind Ausführungsformen der Erfindung, bei denen das Federgelenk als Filmscharnier ausgebildet ist.

Diese Maßnahme hat den Vorteil, daß die Federkonstante des Federgelenks durch geeignete Dimensionierung und Materialauswahl in weiten Bereichen nahezu beliebig eingestellt werden kann, je nachdem, wie dies für den Einzelfall gewünscht wird. Auch hat die Verwendung eines Filmscharniers den Vorteil, daß die vom Filmscharnier beabstandeten dickeren Bauteile in einfacher Weise mit Befestigungsmitteln für die Teile des Lagesensors bzw. für die Fixierung an raumfesten Punkten eines Gerätes oder für die Fixierung weiterer nachgeschalteter Bauteile versehen werden können. Schließlich können Filmscharniere auch in besonders einfacher Weise mehrfach ausgebildet werden, beispielsweise um die vier gelenkigen Eckpunkte eines Parallelogramms zu definieren. Hierzu genügt es beispielsweise, in einem quaderförmigen, verhältnismäßig flachen Block aus geeignetem Material mittels geeigneter Schneidtechnik, beispielsweise mittels Laserschneiden, einen geeigneten Ausschnitt herzustellen, der an vier auf den Eckpunkten eines Rechtecks liegenden Punkten so nahe an die Außenoberfläche des Quaders herangeführt ist, daß an diesen vier Punkten die Filmscharniere entstehen. Auch Funkenerosion kann eingesetzt werden.

Besonders bevorzugt ist, wenn beim Einsatz eines Filmscharniers zumindest eine Seitenwand des Filmscharniers entlang einer vorzugsweise kreisförmigen konkaven Kurve ausgebildet ist.

Diese Maßnahme hat den Vorteil, daß das Filmscharnier in besonders einfacher Weise hergestellt werden kann, außerdem ergeben sich definierte Federeigenschaften von gewünschter Linearität oder gegebenenfalls definierter Nichtlinearität.

Bei weiteren Ausführungsbeispielen der Erfindung ist das Federgelenk so ausgebildet, daß seine Schenkel von einem Winkel von 0° mindestens bis zu einem solchen von 45°, vorzugsweise bis zu 180°, bringbar sind.

Alternativ kann aber das Federgelenk auch so ausgebildet sein, daß seine Schenkel in einem Winkel von nur bis zu maximal 3° aus ihrer Lage - schwenkbar sind.

Diese Maßnahmen haben den Vorteil, daß im erstgenannten Fall ein relativ weiches Bewegungselement für große Wege entsteht, während im zweiten Fall ein relativ starres Bewegungselement für kleine Auslenkungen zur Verfügung gestellt wird.

Bei Ausführungsformen der Erfindung kann das Federgelenk mit seinen angrenzenden Bauteilen entweder aus Kunststoff oder aus Metall, vorzugsweise einem Federstahl, bestehen, je nachdem, wie dies für den Einzelfall zweckmäßig ist.

Es wurde bereits erwähnt, daß bevorzugte Einsatzgebiete des erfindungsgemäßen Bewegungselementes Meßgeräte, insbesondere Wellenmeßgeräte oder aber auch Kreuztische sind.

Schließlich eignet sich die Erfindung in besonderem Maße für ein Meß-oder Justierverfahren für ein Gerät, wie es vorstehend beschrieben wurde, beispielsweise mit elektronischen Meßwertabgreifern, bei dem die abgegriffenen Meß-oder vorgegebenen Justierwerte einem Tabellenrechner zugeleitet werden, der eine empirisch ermittelte oder rechnerisch festgelegte Fehlerabweichung mathematisch berücksichtigt und den Wert korrigiert, wonach der korrigierte Wert einer Anzeigevorrichtung oder Steuervorrichtung zugeleitet wird.

Diese Maßnahmen haben den Vorteil, daß das erfindungsgemäße Bewegungselement im Zusammenhang mit statistisch oder sonstwie auswertenden Recheneinheiten eingesetzt werden kann, um die gewünschten Meßaufgaben zu lösen.

Weitere Vorteile ergeben sich aus der Beschreibung und der beigefügten Zeichnung.

Es versteht sich, daß die vorstehend genannten und die nachstehend noch erläuterten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Figur 1 ein erstes Ausführungsbeispiel eines erfindungsgemäßen Bewegungselementes nach Art eines einarmigen Hebels;

Figur 2 eine Anordnung, ähnlich Fig. 1, jedoch mit einer Anordnung nach Art eines zweiarmigen Hebels;

Figur 3 eine weitere Anordnung ähnlich den Fig. 1 und 2, jedoch mit einer parallelogrammartigen Führung;

Figur 4 eine äußerst schematisierte Ansicht eines Wellenmeßgerätes nach dem Stand der Technik;

Figur 5 eine ebenfalls äußerst schematisierte Darstellung eines Wellenmeßgerätes unter Einsatz eines Bewegungselementes nach Art der Fig. 3;

Figur 6 eine schematisierte Darstellung eines Kreuztisches, der von den erfindungsgemäßen Bewegungselementen Gebrauch macht;

Figur 7 einen Ausschnitt aus der Darstellung der Fig. 6 zur Erläuterung der Dimensionierung der verwendeten erfindungsgemäßen Bewegungselemente;

Figur 8 ein weiteres Ausführungsbeispiel einer kreuztischartigen Anordnung, jedoch mit Justiermitteln für beide Achsen des Kreuztisches;

Figur 9 ein Ausführungsbeispiel ähnlich Fig. 8, jedoch mit im Einzelnen dargestellten Sensoren;

Figur 10 eine Schnittdarstellung in Seitenansicht eines in drei räumlichen Koordinatenrichtungen auslenkbaren erfindungsgemäßen Bewegungselementes, in der Ansicht der Linie X - X von Fig. 11;

Figur 11 eine Schnittdarstellung entlang der Linie XI - XI von Fig. 10.

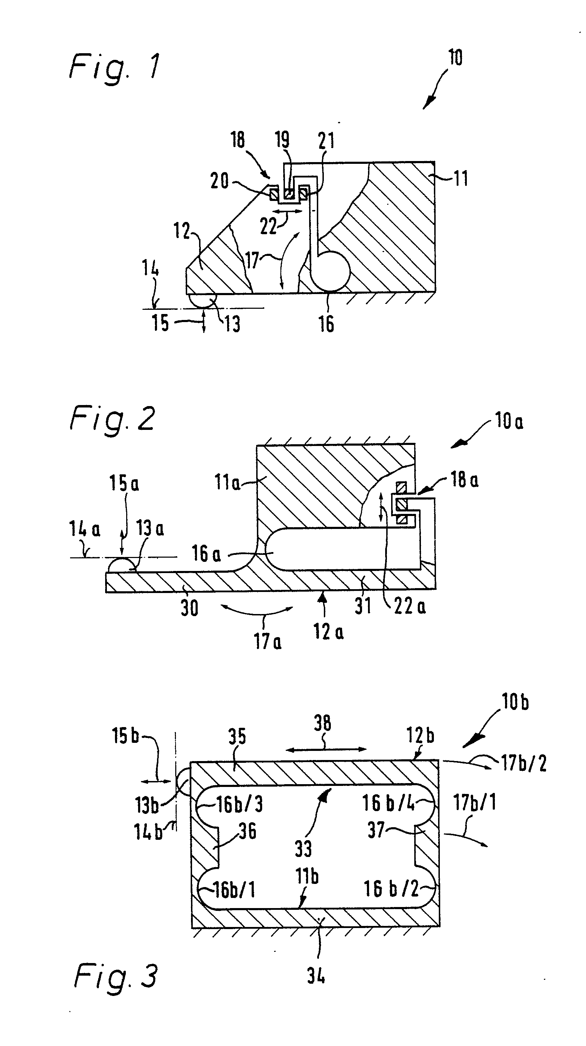

In der nachfolgenden Beschreibung der Ausführungsbeispiele der Figuren 1 bis 11 sind jeweils gleiche Elemente mit gleichen Bezugszeichen versehen, bei den unterschiedlichen Ausführungsbeispielen wurden nur diese Bezugszeichen durch Hinzufügung eines kleinen Buchstabens oder, falls das fragliche Element bei einem Ausführungsbeispiel mehrfach erscheint, durch Hinzufügung eines Buchstaben und einer weiteren arabischen Zahl gekennzeichnet.

In Fig. 1 bezeichnet 10 ingesamt ein erstes Ausführungsbeispiel eines erfindungsgemäßen Bewegungselementes. Ein erstes, raumfestes Bauteil 11 ist mit einem zweiten, beweglichen Bauteil 12 verbunden, das einen Tastkopf 13 trägt, der wiederum an einem nur schematisch angedeuteten Objekt 14 anliegt. Das Objekt 14 kann beispielsweise die Oberfläche eines in seinen Abmessungen auszumessenden Werkstücks sein.

Das erste, raumfeste Bauteil 11 ist mit dem zweiten. beweglichen Bauteil 12 über ein Federgelenk 16 federnd verbunden, wobei das Federgelenk 16 vorzugsweise als Filmscharnier ausgebildet ist. Die Bauteile 11 und 12 sind mit dem Federgelenk 16 aus einem einzigen Materialblock hergestellt, wobei als Werkstoff Kunststoffe oder Metalle, je nach gewünschten Material-und Federungseigenschaften, in Betracht kommen. So kann das Bewegungselement 10 beispielsweise aus einem Stück Federstahl durch Ausschneiden mittels eines Laserschneidegeräts in einem einzigen Arbeitsgang hergestellt werden.

Um die Relativbewegung der Bauteile 11, 12 zueinander zu erfassen, die in Fig. 1 mit einem Pfeil 17 um die Schwenkachse des Federgelenks 16 herum angedeutet ist, ist ein Lagesensor 18 vorgesehen. Der Lagesensor 18 weist ein erstes Sensorteil 19, beispielsweise einen Empfänger, am ersten, raumfesten Bauteil sowie ein oder mehrere zweite Sensorteile 20, 21, beispielsweise Geber, am zweiten, beweglichen Bauteil 12 auf. Die Bewegung der Sensorteile 19 und 20 bzw. 21 zueinander ist in Fig. 1 mit einem weiteren Pfeil 22 veranschaulicht.

Als Lagesensoren 18 können die unterschiedlichsten bekannten Sensorarten eingesetzt werden, insbesondere Induktivgeber, magnetische Geber, kapazitive Geber, optische Geber u. dgl mehr, wie dies an sich bekannt ist. Auch die in Fig. 1 dargestellte gabelförmige Bauweise des Lagesensors 18 ist nur beispielhaft zu verstehen, weil selbstverständlich auch andere Bauformen an sich bekannter Art eingesetzt werden können.

Wird der Tastkopf 13 auf eine zu messende Oberfläche des Objekts 14 aufgesetzt oder gleitet er an einer konturierten Oberfläche des Objekts 14 entlang, so wird der Tastkopf 13 in Richtung des Pfeils 15 ausgelenkt und das zweite, bewegliche Bauteil 12 verschwenkt sich in Richtung des Pfeils 17. Hierdurch ändert sich der Abstand zwischen dem ersten Sensorteil 19 und den zweiten Sensorteilen 20, 21. und am ersten Sensorteil 19, wenn dieses als Empfänger ausgebildet ist, läßt sich ein Meßwert abnehmen, der der Auslenkung des Tastkopfes 13 in Richtung des Pfeils 15 entspricht. Der Tastkopf 13 setzt elastisch auf die Oberfläche des Objekts 14 uf bzw. folgt einer Kontur dieser Oberfläche elastisch, weil das Federgelenk 16 eine entsprechende Rückstellkraft ausübt. Infolge der Einstückigkeit der Bauteile 11, 12 mit dem Federgelenk 16 ist eine Haftreibung bei Auslenkung des zweiten, beweglichen Bauteils 12 in Richtung des Pfeils 17 ausgeschlossen.

Bei dem in Fig. 2 dargestellten zweiten Ausführungsbeispiel eines erfindungsgemäßen Bewegungselements 10a ist die Anordnung ähnlich derjenigen der Fig. 1, jedoch besteht das zweite, bewegliche Bauteil 12a aus einem zweiarmigen Hebel mit einem in Fig. 2 linken Hebelarm 30 und einem rechten Hebelarm 31, die wiederum über ein vorzugsweise als Filmscharnier ausgebildetes Federgelenk 16a mit dem ersten, beweglichen Bauteil 11a verbunden sind.

Am freien Ende des linken Hebelarms 30 ist der Tastkopf 13a angeordnet, während an einer Verlängerung des rechten Hebelarms 31 sich ein Teil des Sensors 18a befindet.

Bei Auslenkung des Tastkopfes 13a verschwenkt sich der zweiarmige Hebel 30, 31 um das Federgelenk 16a in Richtung des Pfeils 17a und am Lagesensor 18a ist, unter Berücksichtigung der Übersetzung der Hebelarme 30, 31, ein Meßsignal abnehmbar.

Fig. 3 zeigt ein besonders bevorzugtes drittes Ausführungsbeispiel eines erfindungsgemäßen Bewegungselementes 10b, das in Gestalt eines Parallelogramms 33 ausgebildet ist. Hierbei besteht das erste, raumfeste Bauteil 11b aus einem ersten festen Schenkel 34 des Parallelogramms 33. An beiden Enden des ersten festen Schenkels 34 sind Federgelenke 16b/1 bzw. 16b/2 angeordnet, die zu freien Schenkeln 36, 37 führen, die wiederum über weitere Federgelenke 16b/3 bzw. 16b/4 mit einem zum ersten festen Schenkel 34 parallelen zweiten, freien Schenkel 35 führen.

Am linken Ende des zweiten parallelen freien Schenkels 35 befindet sich der Tastkopf 13b, so daß bei Auslenkung des Tastkopfes 13b das Parallelogramm 33 in Richtung der Pfeile 17b/1 bzw. 17b/2 verschwenkt wird und der zweite parallele freie Schenkel 35 eine Bewegung ausübt, die eine Komponente in Richtung des Pfeils 38 parallel zur Erstreckung des Schenkels 35 aufweist.

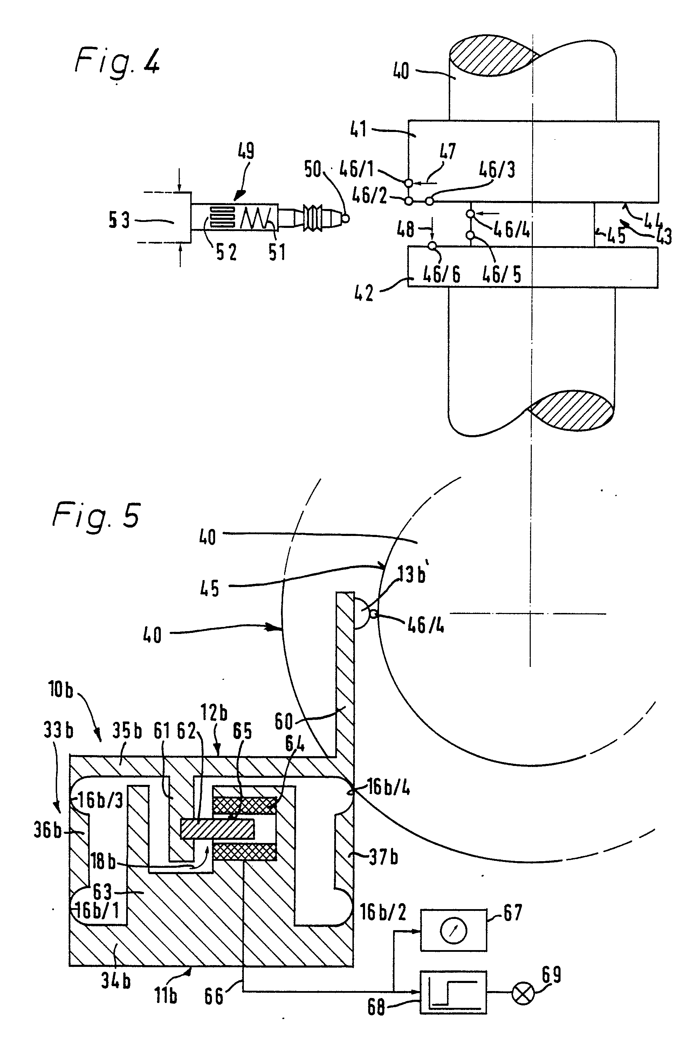

Fig. 4 zeigt ein herkömmliches Wellenmeßgerät mit einer als Meßobjekt dienenden Welle 40. Die Welle 40 ist mit zwei Bunden 41, 42 größeren Durchmessers versehen, zwischen denen sich eine Eindrehung 43 geringeren Durchmessers befinden mag. Die Bunde 41, 42 definieren radiale Schulterflächen 44, während die Oberfläche der Eindrehung 43 eine Umfangsfläche 45 bildet.

An der Außenkontur der Welle 40 mag es nun interessieren, die Maßhaltigkeit an verschiedenen Meßpunkten zu kennen, beispielsweise wenn der Meßpunkt 46/1 auf der Umfangsfläche des Bundes 41, eines Meßpunktes 46/2 auf dem Übergang von der Umfangsfläche zur Schulterfläche 44, eines Meßpunktes 46/3 auf der Schulterfläche 44, von Meßpunkten 46/4 und 46/5 auf der Umfangsfläche 45 der Eindrehung 43 sowie eines Meßpunktes 46/6 auf der gegenüberliegenden Schulterfläche des zweiten Bundes 42, beispielsweise um die Maßhaltigkeit eines Durchmessers 47 oder eines axialen Maßes 48, in den Meßpunkten 6/1 bzw. 46/6 zu überprüfen.

Hierzu verwendet man beim Stand der Technik Meßtaster 49 mit einem kugelkappenförmigen Tastkopf 50, der über ein geeignetes Gestänge gegen die Kraft einer Feder 51 ein InduktivMeßsystem 52 betätigt. Aufgrund des Durchmessers 53 des Meßtasters 49 sind jedoch Simultanmessungen an den Meßpunkten 46/1 bis 46/6 nicht möglich, weil mehrere Meßtaster 49 wegen des doch erheblichen Durchmessers 53 nicht unmittelbar nebeneinander angeordnet werden können.

Fig. 5 zeigt nun in Seitenansicht in vergrößertem Maßstab eine entsprechende Anordnung mit dem erfindungsgemäßen Bewegungselement 10b, wie es prinzipiell bereits zu Fig. 3 geschildert wurde.

Das Bewegungselement 10b, das bekanntlich nach Art eines Parallelogramms 33b aufgebaut ist, trägt, in Abweichung vom Ausführungsbeispiel in Fig. 3, am rechten Ende des zweiten parallelen freien Schenkels 35b einen rechtwinklig abstehenden schmalen Meßfortsatz 60, der sich somit im nicht-ausgelenkten Zustand des Parallelogramms 33b in Verlängerung des vierten freien Schenkels 37b erstreckt. Am freien Ende des Meßfortsatzes 60 ist der Tastkopf 13b' angeordnet, der beispielsweise gerade am Meßpunkt 46/4 auf der Umfangsfläche 45 der Eindrehung 43 anliegt.

Vom zweiten parallelen freien Schenkel 35b erstreckt sich nach unten in den vom Parallelogramm 3b umschriebenen Bereich ein Fortsatz 61, der mit einem Eisenkern 62 in paralleler Ausrichtung zum zweiten parallelen freien Schenkel 35 versehen ist.

Vom ersten, festen Schenkel 34b erstreckt sich nach oben in weiterer Fortsatz 63, der den zuvor genannten Fortsatz 61 aufnimmt und eine Magnetspule 64 aufweist, in deren Luftraum 65 der Eisenkern 62 teilweise eintaucht.

Wird nun der Tastkopf 13b' ausgelenkt, so ist leicht einzusehen, daß der Eisenkern 62 sich axial in den Luftraum 65 der Magnetspule 64 hineinbegibt, weil seine Bewegungsrichtung überwiegend parallel zum zweiten parallelen freien Schenkel 35b verläuft und der geringfügige radiale Versatz vernachlässigbar klein ist.

Auf diese Weise erzeugt der so gebildete Lagesensor 18b ein Meßsignal, das über eine Leitung 66 auf ein kontinuierlich anzeigendes Anzeigeelement 67 sowie auf eine Schwellwertstufe 68 geführt wird, die ihrerseits am Ausgang mit einer Leuchte 69 versehen ist. Das kontinuierlich anzeigende Anzeigeelement 67 kann eine Analog-oder Digitalanzeige aufweisen, auch können in das kontinuierlich anzeigende Anzeigeelement 67 geeignete statistische Auswertmittel integriert sein, wie dies an sich bekannt ist. Der Schwellwertschalter 68 kann entweder eine Nullposition des Tastkopfs 13b' erfassen und mittels der Leuchte 69 anzeigen, ebenso gut können aber auch vorbestimmte endliche Meßwerte vorgegeben werden, deren Erreichen durch Aufleuchten der Leuchte 69 angezeigt wird.

Es versteht sich, daß beim Bewegungselement 10b der Fig. 5 ebenso wie bei den anderen Bewegungselementen 10, die im Rahmen der vorliegenden Erfindung beschrieben werden, nicht nur induktive Längssensoren 18b, sondern auch andere Sensoren beliebiger Bauart verwendet werden können. Auch ist die Anordnung an den Fortsätzen 61 und 63 lediglich als Beispiel zu verstehen, die zwar, da sie im Umfang des Parallelogramms 33b angeordnet ist, besonders raumsparend ist, jedoch bei entsprechenden Randbedingungen auch anders gewählt sein kann.

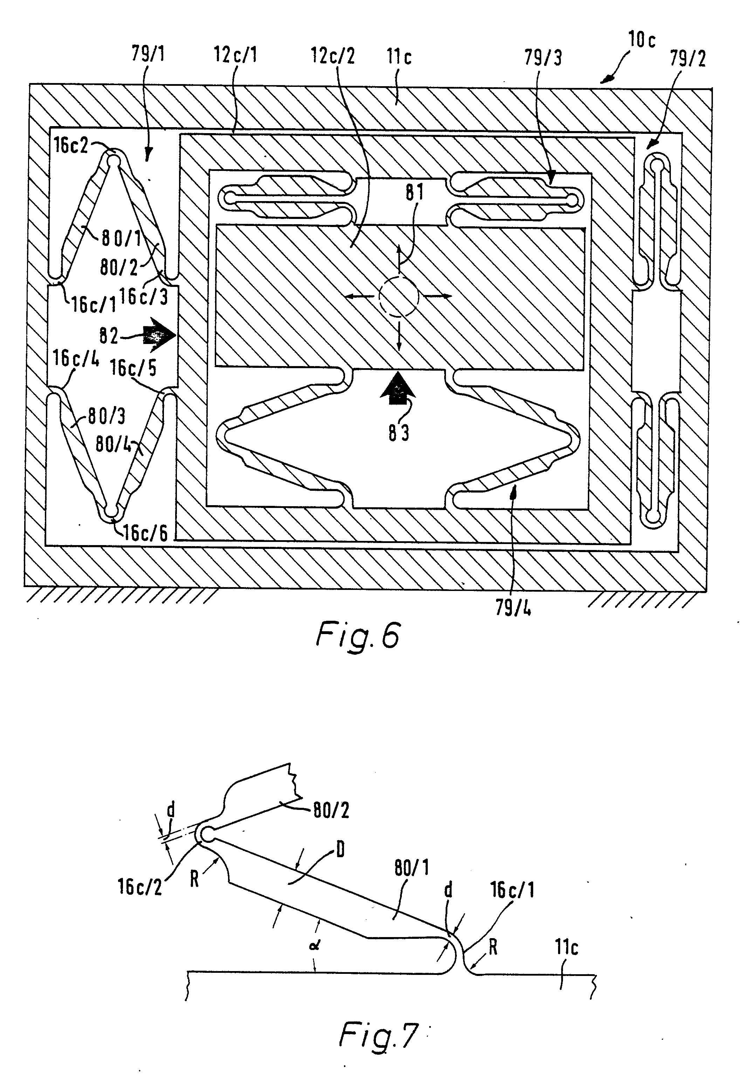

Fig. 6 zeigt ein weiteres Ausführungsbeispiel eines erfindungsgemäßen Bewegungselements 10c, bei dem das erste, raumfeste Bauteil 11c als rechteckiger starrer Rahmen ausgebildet ist. Von den schmalen Innen-Seitenwänden des Rahmens führen Gelenkbaugruppen 79/1 und 79/2 zu einem beweglichen Bauteil 12c/1, das wiederum als starrer rechteckförmiger Rahmen ausgebildet ist. Von dessen Innen-Längsseiten führen entsprechende Gelenkbaugruppen 79/3 und 79/4 zu einem weiteren beweglichen Bauteil 12c/2, das beispielsweise als rechteckförmiger Objektträger mit einem Kopf 81 ausgebildet sein kann.

Die Gelenkbaugruppen 79 bestehen jeweils aus vier starren Schenkeln 80, von denen z.B. in der Gelenkbaugruppe 79/1 ein erster Schenkel 80/1 mittels eines Federgelenks 16c/1 am ersten, raumfesten Bauteil 11 angelenkt ist, während sein entgegengesetztes Ende über ein weiteres Federgelenk 18c/2 an einem weiteren Schenkel 80/2 angelenkt ist, dessen entgegengesetztes Ende wiederum über ein weiteres Federgelenk 16c/3 am beweglichen Bauteil 12c/1 angelenkt ist. Symmetrisch hierzu sind zwei weitere Schenkel 80/3 und 80/4 mittels Federgelenken 16c/4, 16c/5 und 16c/6 zwischen den Schmalseiten der die Bauteile 11c und 12c/1 bildenden rechteckförmigen Rahmen angeordnet. Insgesamt entsteht so für jede Gelenkbaugruppe 79 eine sechseckförmige Struktur mit jeweils sechs Gelenkpunkten in Gestalt der Federgelenke 16c/.... die wiederum vorzugsweise als Filmscharniere ausgebildet sind.

Durch geeignete Dimensionierung und Materialauswahl kann man bereits bei der Herstellung der Gelenkbaugruppen 79, die ebenfalls mittels Laserschneiden, Elektroerosion, Ätzen od. dgl. hergestellt werden können, erreichen. daß das bewegliche Bauteil 12c/2 mit dem Kopf 81 bereits in einer definierten Ruheposition angeordnet ist. Ansonsten ist es durch Aufbringen von Kräften, wie sie in Fig. 6 mit Pfeilen 82 und 83 symbolisiert sind, möglich, das zweite Bauteil 12c/2 in zwei zueinander rechtwinkligen Koordinatenrichtungen auszulenken, indem in der Darstellung der Fig. 6 eine Horizontalkraft in Richtung des Pfeils 82 auf den das bewegliche Bauteil 12c/1 bildenden Rahmen und eine Vertikalkraft in Richtung des Pfeils 83 auf den das bewegliche Bauteil 12c/2 bildenden Objektträger ausgeübt wird.

Auf diese Weise bildet das Bewegungselement 10c der Fig. 6 einen Kreuztisch, der entweder zum Führen eines Objekts (Kopf 81) in zwei zueinander senkrechte Koordinatenrichtungen dienen kann oder aber auch zum Verfolgen eines sich in einer Ebene bewegenden Objekts, indem auf dem Objektträger (bewegliches Bauteil 12c/2) ein entsprechender Suchsensor, z.B. eine optische Reflektionseinrichtung, angebracht wird.

Fig. 7 zeigt noch ein Detail aus Fig. 6, nämlich den Schenkel 80/1 mit den daran angrenzenden Federgelenken 16c/1 und 16c/2, wobei sich aus dieser Detaildarstellung einige bevorzugte Dimensionierungsangaben ergeben. So kann der Schenkel 80/1 vorzugsweise auf einen Winkel von bis zu 20° oder darüber hinaus verschwenkbar sein, die Dicke d der als Federgelenk 16 dienenden Filmscharniere kann bei Verwendung eines hochelastischen metallischen Werkstoffes z.B. 0,15 mm betragen, die Dicke D des starren Teils der Schenkel 80/1 kann z.B. 4 mm betragen, und der Krümmungsradius im konkaven Übergang von den starren Teilen zu den Federgelenken 16 kann beispielsweise 2 mm betragen.

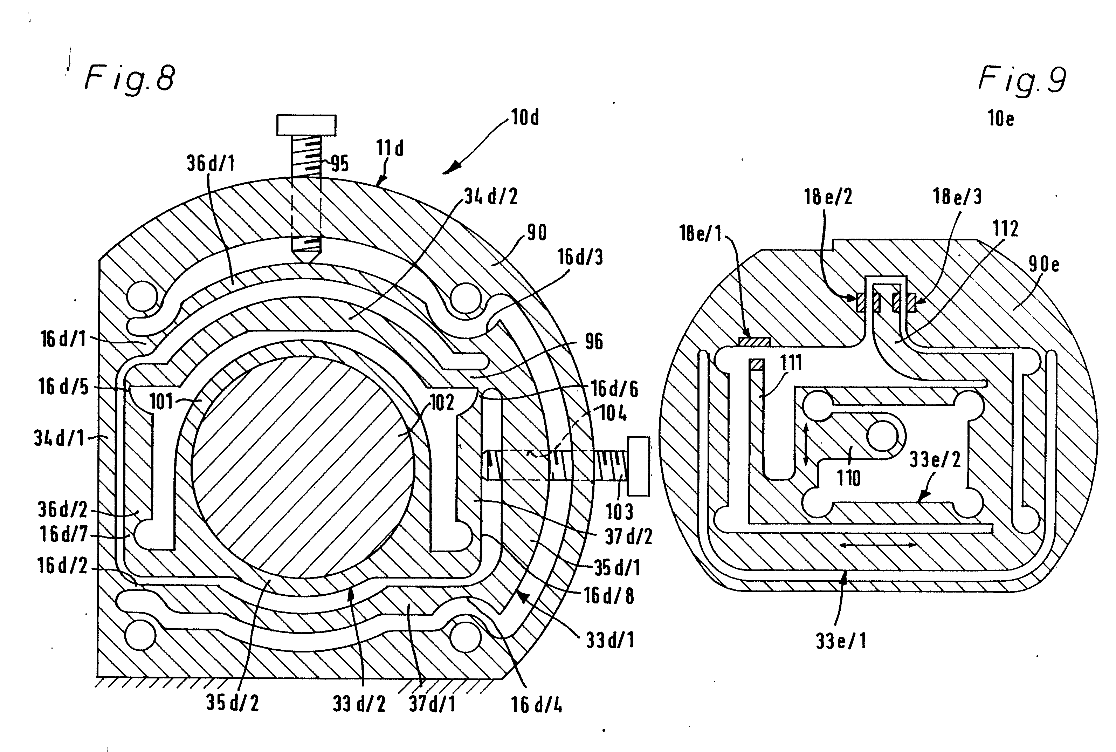

Ein weiteres Ausführungsbeispiel eines erfindungsgemäßen Bewegungselements 10d ist in Fig. 8 dargestellt. In einem als Gehäuse 90 ausgebildeten ersten. raumfesten Bauteil 11d sind zwei ineinanderliegende Parallelogramme 33d/1 und 33d/2 angeordnet. Hierzu ist der zweite parallele freie Schenkel 35d/1 des äußeren Parallelogramms 33d/1 mit einer Brücke 96 versehen, die zum ersten, festen Schenkel 34d/2 des inneren Parallelogramms 33d/2 führt.

Eine erste Justierschraube 95 ist durch das Gehäuse 90 eindrehbar und sitzt mit ihrem freien Ende auf dem dritten freien Schenkel 36d/1 des äußeren Parallelogramms 33d/1 auf, so daß dieses in der Darstellung der Fig. 8 in vertikaler Richtung in seiner Ausgangslage einjustiert werden kann.

Eine zweite Justierschraube 103 ist ebenfalls durch das Gehäuse 90 schraubbar, durchsetzt ein Langloch 104 iim zweiten parallelen freien Schenkel 35d/1 des äußeren Parallelogramms 33d/1 und sitzt mit seinem freien Ende auf dem vierten freien Schenkel 37d/2 des inneren Parallelogramms 33d/2 auf. Auf diese Weise kann durch Verdrehen der zweiten Justierschraube 103 das innere Parallelogramm 33d/2 in horizontaler Richtung in seiner Ausgangslage einjustiert werden. Das Langloch 104 ist in diesem Falle so ausgebildet, daß die zweite Justierschraube 103 auch bei einer Vertikalbewegung des zweiten parallelen freien Schenkels 35d/1 des äußeren Parallelogramms 33d/1 nicht berührt wird.

Der zweite parallele freie Schenkel 35d/2 des inneren Parallelogramms 33d/2 ist mit einer Halterung 101 für einen Kern 102 versehen, wobei der Kern 102 repräsentativ für ein zu positionierendes Objekt, für einen Lagesensor, für einen Verfolgungssensor od. dgl. steht.

Das in Fig. 9 dargestellte weitere erfindungsgemäße Bewegungselement 10e entspricht von der Kinematik her dem Bewegungselement 10d der Fig. 8.

Ergänzend ist in Fig. 9 nur gezeigt, daß an verschiedenen Stellen des äußeren Parallelogramms 33e/1 bzw. des inneren Parallelogramms 33e/2 Fortsätze 110, 11 oder 112 angebracht werden können, um dort Lagesensoren, Objekte od. dgl. zu fixieren.

So kann z.B. der erste Fortsatz 110 am inneren Parallelogramm 33e/2 zum Fixieren eines Objekts dienen. Der zweite Fortsatz 111 am inneren Parallelogramm 33e/2 kann ein Teil eines Lagesensors 18e/1 tragen, wobei bei der Dimensionierung und Positionierung der Teile des Lagesensors 18e/1 zu berücksichtigen ist, daß der zweite Fortsatz 111 nicht nur die Vertikalbewegung des inneren Parallelogramms 33e/2, sondern auch die Horizontalbewegung des äußeren Parallelogramms 33e/1 mitmacht. Es muß also für eine genügende Überdeckung der miteinander in Wirkungsverbindung tretenden Teile des Längssensors 18e/1 gesorgt werden.

Schließlich kann der dritte Fortsatz 112 am äußeren Parallelogramm 33e/1 mit einem oder mehreren Lagesensoren 18e/2 oder 18e/3 versehen werden, um die Horizontalbewegungen des äußeren Parallelogramms 33e/1 zu erfassen.

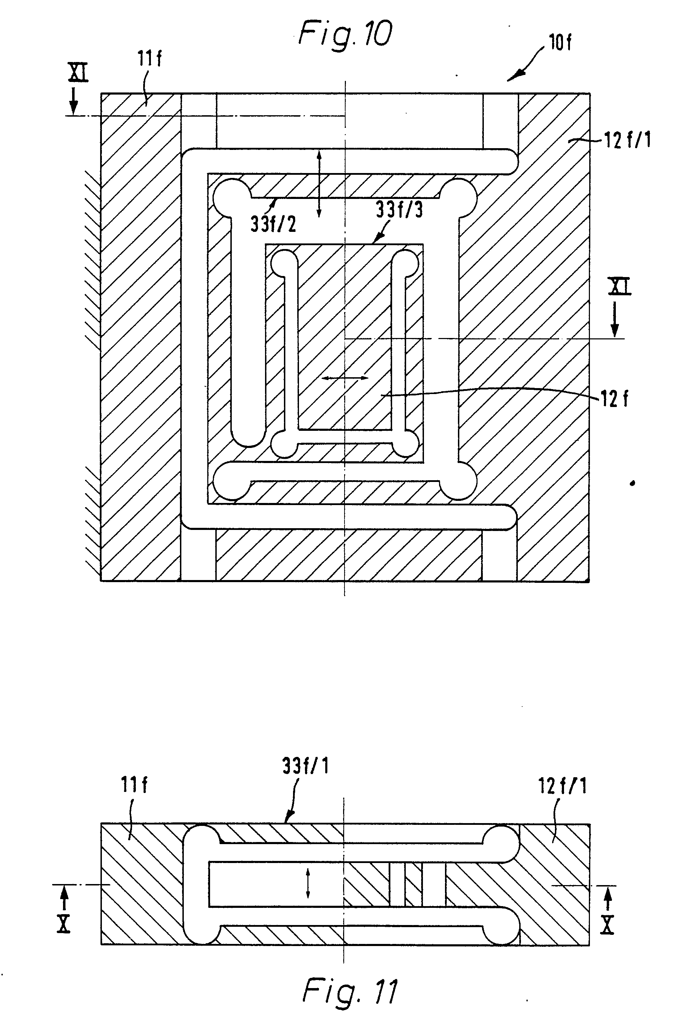

Die Figuren 10 und 11 zeigen schließlich noch eine weitere Variante eines erfindungsgemäßen Bewegungselements 10f, das über drei ineinander verschachtelte Parallelogramme 33f/1, 33f/2 und 33f/3 verfügt.

Wie man leicht aus den beiden Schnittdarstellungen der Figuren 10 und 11 erkennen kann, ist die Anordnung so getroffen, daß die drei genannten Parallelogramme 33f/1, 33f/2 und 33f/3 in drei zueinander senkrechten Koordinatenrichtungen wirksam sind, so daß das bewegliche Teil 12f am innersten Parallelogramm 33f/3 in drei zueinander senkrechten Koordinatenrichtungen d.h. frei im Raum bewegbar ist.

## Ansprüche

1. Bewegungselement für Feinmeß-oder Justiergeräte mit mindestens einem Federgelenk (16), dadurch gekennzeichnet, daß das Federgelenk (16) mit seinen angrenzenden Bauteilen (11, 12; 80) einstückig ausgebildet ist.

2. Bewegungselement nach Anspruch 1, dadurch gekennzei hnet, daß je zwei von mindestens vier als starre Schenkel (34, 35, 36, 37) ausgebildeten Bauteilen durch ein Federgelenk (16) zu mindestens einem in seinen Eckpunkten elastisch verformbaren Parallelogramm (33) verbunden sind, wobei wenigstens ein Schenkel (34) bei der Verformung des ihm zugeordneten Parallelogramms (33) unverschiebbar ist.

3. Bewegungselement nach Anspruch 2, dadurch gekennzeichnet, daß ein Schenkel (35d/1) eines ersten Parallelogramms (33d/1; 33e/1; 33f/1) mit einem Schenkel (34d/2) eines zweiten Parallelogramms (33d/2; 33e/2; 33f/2) vorzugsweise starr und einstückig verbunden ist.

4. Bewegungselement nach Anspruch 3, dadurch gekennzeichnet, daß mehr als zwei Parallelogramme, vorzugsweise drei Parallelogramme (33f/1, 33f/2, 33f/3) in den drei Raumebenen angeordnet, miteinander verbunden sind.

5. Bewegungselement nach einem der Ansprüche 1 bis 4, dadurch gekennzeichnet, daß mindestens ein bewegliches Bauteil (12) bzw. Schenkel (35) mit einem an ein Meßobjekt (14) anlegbaren Tastkopf (13) versehen ist, der vorzugsweise an einem Fortsatz (30; 60; 102) des Bauteils (12a) bzw. Schenkels (35b, 35d/2) angeordnet ist, und rechtwinklig vom beweglichen Schenkel (35b) in Verlängerung eines weiteren beweglichen Schenkels (37b) eines Parallelogramms (33b) absteht.

6. Bewegungselement nach einem der Ansprüche 1 bis 5, dadurch gekennzeichnet, daß mindestens ein bewegliches Bauteil (12) bzw. Schenkel (35b) mit einem ersten Teil (19; 62) und mindestens ein festes Bauteil (11) bzw. Schenkel (34b) mit einem zweiten Teil (20; 64) eines Lagesensors (18) versehen sind.

7. Bewegungselement nach Anspruch 6, dadurch gekennzeichnet, daß die Teile (62, 64) an einem Fortsatz (31; 61; 63, 111, 112) des Bauteils (12a) bzw. Schenkels (34b, 35b) angeordnet sind.

8. Bewegungselement nach einem der Ansprüche 1 bis 7, dadurch gekennzeichnet, daß das Federgelenk (16) als Filmscharnier ausgebildet ist.

9. Bewegungselement nach Anspruch 8, dadurch gekennzeichnet, daß zumindest eine Seitenwand des Filmscharniers entlang einer vorzugsweise kreisförmigen konkaven Kurve ausgebildet ist.

10. Bewegungselement nach einem der Ansprüche 1 bis 9, dadurch gekennzeichnet, daß das Federgelenk (16) so ausgebildet ist, daß seine Schenkel (80) von einem Winkel von 0° mindestens bis zu einem solchen von 45°, vorzugsweise bis zu 180°, bringbar sind.

11. Bewegungselement nach einem der Ansprüche 1 bis 9, dadurch gekennzeichnet, daß das Federgelenk (16) so ausgebildet ist, daß seine Schenkel (80) in einem Winkel von bis zu maximal 3° aus ihrer Lage schwenkbar sind.

12. Bewegungselement nach einem der Ansprüche 1 bis 11, dadurch gekennzeichnet, daß das Federgelenk (16) mit seinen angrenzenden Bauteilen (11, 12; 80) aus Kunststoff besteht.

13. Bewegungselement nach einem der Ansprüche 1 bis 11, dadurch gekennzeichnet, daß das Federgelenk (16) aus Metall, vorzugsweise aus Federstahl, besteht.

14. Bewegungselement nach einem der Ansprüche 5 bis 13, dadurch gekennzeichnet, daß es Teil eines Wellenmeßgerätes ist und daß das Meßobjekt (14) die Außenkontur einer Welle (40) ist.

15. Bewegungselement nach einem der Ansprüche 3 bis 13, dadurch gekennzeichnet, daß es Teil eines Kreuztisches ist.

0 264 094

*Fig. 1*

*Fig. 2*

*Fig. 3*

*Fig. 4*

*Fig. 5*

0 264 094

Fig.6

Fig.7

# Fig.8

36d/1  95  11d  10d

34 d/2

90

16d/3

96

16d/6

104

16d/1

16 d/5  101  102

34 d/1

36d/2

16d/7

16d/2

103

37 d/2

35 d/1

16 d/8

33 d/1

35 d/2  33 d/2  37 d/1  16 d/4

# Fig.9

10e

18e/1  18e/2  18e/3  112

90e

111

110  33e/2

33e/1

0 264 094

## Fig. 10

11 f

10 f

12 f/1

33f/2

33f/3

12 f

XI

## Fig. 11

11 f

33f/1

12 f/1

X

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE - A1 - 3 113 497 (VDO ADOLF SCHINDLING) | 1 | G 12 B 9/08 |
| A | * Fig. 3,4; Seite 10, Zeilen 5,6 * | 2-15 | |
| | ---- | | |

| RECHERCHIERTE SACHGEBIETE (Int. Cl.4) |
|---|
| G 01 D 11/00 |
| G 12 B 9/00 |
| G 12 B 1/00 |
| G 02 B 21/00 |

Der vorliegende Recherchenbericht wurde für alle Patentansprüche erstellt.

| Recherchenort | Abschlußdatum der Recherche | Prüfer |
|---|---|---|
| WIEN | 30-11-1987 | KUNZE |